# EUROPÄISCHE PATENTSCHRIFT

(11) **EP 2 070 757 B1**
(45) Veröffentlichungstag und Bekanntmachung des Hinweises auf die Patenterteilung: **11.01.2012**
(21) Anmeldenummer: 08019810.4
(22) Anmeldetag: 13.11.2008
(51) Int. Cl.: B60K 35/00

(54) **Füllstandsanzeige für Kraftstoff und Zusatzstoffe**
Fill level indicator for fuel and additives
Affichage du niveau de remplissage pour carburant et additifs

(30) Priorität: 05.12.2007 DE 102007058576
(43) Veröffentlichungstag der Anmeldung: 17.06.2009
(73) Patentinhaber: MAN Truck & Bus AG, 80995 München (DE)
(72) Erfinder: Zimmermann, Andreas, 81541 München (DE); Spaderna, Josef, 85258 Weichs (DE); Merz, Jürgen, 85757 Karlsfeld (DE)

(56) Entgegenhaltungen:
- DE-A1- 2 908 193
- DE-A1- 10 330 741
- DE-A1-102005 061 862

## Beschreibung

Die Erfindung bezieht sich auf ein Kraftfahrzeug, insbesondere auf ein Nutzfahrzeug, wie LKW und Omnibus, mit einem Armaturenbrett, das ein Anzeigegerät nach dem Oberbegriff des Anspruchs 1 umfasst sowie auf ein Verfahren zum Betrieb des Anzeigegeräts nach Anspruch 3.

Aus der DE 38 35 483 ist eine Kraftstoffanzeige, insbesondere eines Kraftfahrzeugs bekannt, die einen Zeiger aufweist, der als Hauptzeiger die im Kraftstofftank enthaltene Kraftstoffmenge über einen bestimmten Zeigerausschlagwinkel zeigt. Zusätzlich zu dem genannten Hauptzeiger ist in der Kraftstoffanzeige ein zweiter Zeiger als Reserveanzeiger für die vorhandene Kraftstoffmenge vorgesehen. Auch der Reserveanzeiger hat einen großen Ausschlag entsprechend dem Ausschlagwinkel des Hauptzeigers. Auf diese Weise kann die noch zur Verfügung stehende Reservekraftstoffmenge exakt und deutlich an der Kraftstoffanzeige abgelesen werden. In einer Ausgestaltung der Erfindung sollen der Hauptzeiger und der Reserveanzeiger durch zwei getrennte Spulen angetrieben werden, wobei der Widerstand des entsprechenden Gebers im Kraftstofftank für die angegebenen Zeigerausschläge angegeben ist.

Ferner ist aus der DE 10 2005 061 862 A1, die die Merkmale des Oberbegriffs des Anspruchs 1 beinhaltet, ein Messsystem im Kraftfahrzeugbereich bekannt, das zum Messen von wenigstens zwei Füllständen dient, wobei eine erste Messeinrichtung zum Messen eines ersten Füllstandes eines ersten Behälters vorgesehen ist. Die erste Messeinrichtung weist eine erste Einrichtung auf, die ein erstes elektrisches Messsignal erzeugt, das in Abhängigkeit eines ersten Füllstands steht. Das Messsystem sieht weiterhin eine zweite Messeinrichtung vor, mit der ein zweiter Füllstand in einem zweiten Behälter gemessen werden kann. Die zweite Messeinrichtung weist eine zweite Einrichtung zum Erzeugen eines zweiten elektrischen Messsignals auf. Das zweite elektrische Messsignal steht in Abhängigkeit vom zweiten Füllstand. Die erste Einrichtung und die zweite Einrichtung weisen wenigstens ein gemeinsames Bauteil auf.

Die ständig wachsende Funktionalität in der Ausstattung moderner Nutzfahrzeuge führt zu einer zunehmenden Anzahl von Bedienelementen und Anzeigeinstrumenten, die in der Instrumententafel im gesamten Sichtbereich des Kraftfahrzeuglenkers angeordnet werden müssen. Aufgrund der baulichen Gegebenheiten z. B. des Lenkrades müssen die Bedienelemente und Anzeigeinstrumente in einem klar umgrenzten Bereich der Instrumententafel angeordnet sein, der für den Fahrer im Fahrbetrieb innerhalb des Lenkradkranzes und oberhalb des Lenkradmittelteils sichtbar sind.

Es ist die Aufgabe der Erfindung, ein Kraftfahrzeug mit einer Instrumententafel bereit zu stellen, die bei gleichzeitig konstant bleibender Fläche der Instrumententafel der wachsenden Anzahl von Bedienelementen und Anzeigeinstrumenten Rechnung trägt und bei der die Überwachung der Füllstande der Betriebsstoffe gewährleistet ist..

Diese Aufgabe wird erfindungsgemäß durch die Merkmale der Ansprüche 1 und 3 gelöst.

Heutige Kraftfahrzeuge benötigen zur Einhaltung von Abgasnormen wie beispielsweise Euro 4 und Euro 5 Zusatzstoffe zur Abgasnachbehandlung, die in separaten Tankbehältern im Fahrzeug bevorratet sind. Dabei sind als Kraftfahrzeuge jede Art von Kraftfahrzeugen gemeint, wobei im Folgenden exemplarisch von Nutzfahrzeugen ausgegangen wird. Erfindungsgemäß können die Füllstände von mindestens zwei in entsprechenden Vorratsbehältern bevorrateten Betriebsstoffen mittels einer einzigen Anzeigeeinheit dargestellt und dem Kraftfahrzeuglenker angezeigt werden. Die Instrumententafel bleibt dabei übersichtlich und klar strukturiert. Die Anzeigeinstrumente können in gewohnter Größe und für den Kraftfahrzeuglenker deutlich erkennbar angeordnet werden. Die Instrumententafel bleibt aufgrund der begrenzten Anzahl von Anzeigeinstrumenten und Bedienelementen klar strukturiert, so dass der Kraftfahrzeuglenker auch in Notfallsituationen alle Anzeigeinstrumente und Bedienelemente im Blick behalten und überwachen kann. Da die Anzeigen mindestens zweier Funktionen durch eine einzige Anzeigeeinheit gewährleistet werden, ist eine Reduzierung des Durchmessers der Anzeigeneinheit nicht erforderlich. Als erster Füllstand wird derjenige angezeigt, bei der der zugehörige Betriebsstoff die höchste Priorität bezüglich Sicherheit und/oder Ökologie und /oder Ökonomie und/oder Komfort genießt.

Nach einer anderen Ausführungsform der Erfindung zeigt die Anzeigeeinheit die Füllstände im zeitlichen Abstand nacheinander an. Denkbar ist, dass die Anzeigeeinheit einen Füllstand z. B. über einen Zeitraum von 10 Minuten anzeigt und danach der andere Füllstand über die vorbestimmte oder durch den Fahrer manuell wählbare Zeitdauer darstellbar ist.

Nach einer anderen Ausführungsform der Erfindung werden die Füllstandsanzeigen durch von einander unabhängige manuelle Betätigungen abgerufen. Der Kraftfahrzeuglenker kann die jeweiligen Füllstände z. B. durch Knopfdruck oder Betätigung eines Schalters abrufen. Denkbar ist auch, dass die Anzeigeeinheit nach erneuter Fahrtaufnahme oder nach einer vorher festzulegenden Anzahl zurück gelegter Kilometer den jeweils anderen Füllstand anzeigt.

Nach einer weiteren Ausführungsform der Erfindung werden die verschiedenen Füllstandsanzeigen automatisch in Abhängigkeit eines hinterlegten Algorithmus angezeigt. Denkbar ist, dass nach Einschalten der Zündung des Motors sämtliche Füllstände in zeitlichem Abstand nacheinander angezeigt werden. Hierdurch erhält der Kraftfahrzeuglenker die Möglichkeit, sich noch vor Antritt der Fahrt über kritische Füllstände in Kenntnis zu setzen.

Nach einer weiteren Ausführungsform der Erfindung wird als erster Füllstand derjenige mit der geringsten verbleibenden Fahrdistanz angezeigt. Einer Beschädigung des Kraftfahrzeugs durch Trockenlaufen der Vorratsbehälter kann somit entgegen gewirkt werden.

Nach einer anderen Ausführungsform der Erfindung werden die verschiedenen Füllstände in einem vorbestimmten Zyklus in zeitlichem Abstand voneinander angezeigt. Der zeitliche Abstand kann dabei unabhängig vom Fahrbetrieb an die Uhrzeit gekoppelt sein. Andererseits kann der Zyklus dabei bei erneutem Start des Motors z.B. nach einer Pause neu berechnet werden.

In einer anderen Ausführungsform der Erfindung sind die unterschiedlichen Verfahrensweisen der Füllstandsanzeigen miteinander kombinierbar.

Eine weitere Ausführungsform der Erfindung sieht vor, dass die verschiedenen Füllstandsmengen jeweils über ein unterschiedliches Symbol in der Anzeigeeinheit rückgemeldet werden. Denkbar ist, das entsprechende Symbol je nach angezeigtem Füllstand farblich anders auszugestalten, oder je nach angezeigtem Betriebsstofffüllstand das entsprechende Symbol an einem unterschiedlichen Ort in der Anzeigeeinheit darzustellen.

Weitere vorteilhafte Ausgestaltungen und zweckmäßige Fortbildungen des erfindungsgemäßen Anzeigegeräts sind aus der nachstehenden Beispielsbeschreibung und anhand der Zeichnung entnehmbar. Hierbei zeigen:
- Figur 1: die Anzeigeeinheit im Testbetrieb mit gleichzeitiger Darstellung beider Be- triebsstoffsymbole,
- Figur 2: die Anzeigeeinheit als Kraftstoffanzeige und
- Figur 3: die Anzeigeeinheit zur Darstellung für einen weiteren Betriebsstoff.

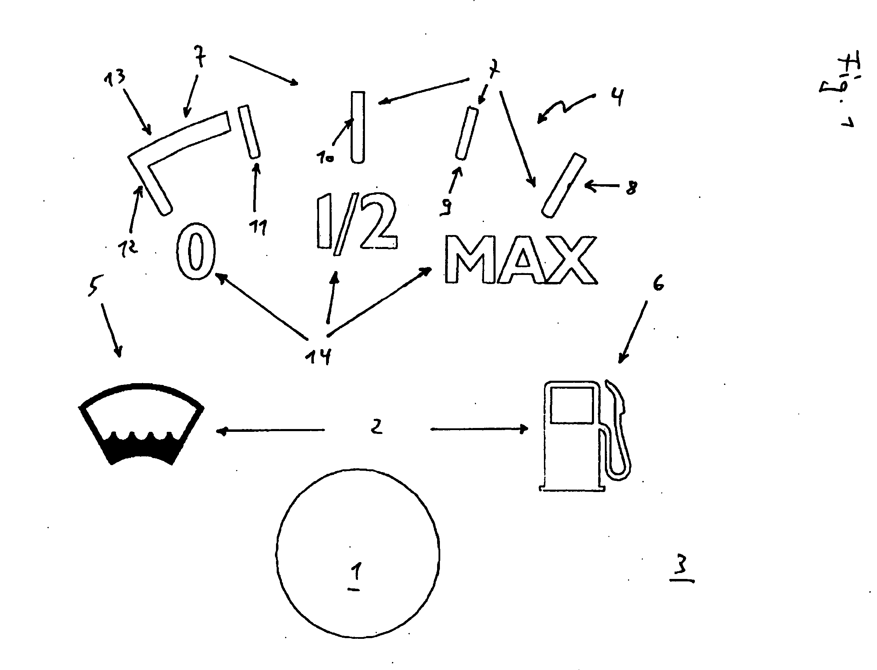

In den Figuren 1-3 sind die Anzeigeeinheiten jeweils ohne Zeiger dargestellt. Die Darstellungen der Fig. 1-3 sind lediglich beispielhaft gemeint, so dass auch jede andere Darstellungsform vorstellbar ist. Figur 1 zeigt dabei, die Anzeigeeinheit im Testbetrieb mit der gleichzeitigen Darstellung der Symbole für Kraftstoff und einen weiteren Betriebsstoff, wobei in den Beispielsbeschreibungen von einem Zusatzstoff zur Abgasnachbehandlung ausgegangen wird. Die Verwendung des genannten Zusatzstoffs ist jedoch nur beispielhaft gemeint. Die Anzeigeeinheit des erfindungsgemäßen Anzeigegerätes kann auch für die Anzeige jedes anderen Betriebsstoffes eines Nutzfahrzeugs verwendet werden. Unter Betriebsstoffen sind erfindungsgemäß am Kraftfahrzeug nachzufüllende Stoffe zu verstehen, die nicht während oder durch den Betrieb des Kraftfahrzeugs im Kraftfahrzeug selbst regeneriert werden. In Figur 1 ist eine Zeigerhalterung 1 eines nicht gezeigten Zeigers dargestellt. Die Figuren 1 bis 3 gehen beispielhaft von einer zeigerbasierten Wertedarstellung aus. Die Zeiger können dabei mechanischer Art oder visualisiert dargestellt sein. Zu beiden Seiten neben der Zeigerhalterung 1 sind die beiden jeweiligen Betriebsstoffsymbole 2 dargestellt. Halbkreisförmig oberhalb der Betriebsstoffsymbole 2 ist in der Anzeigeeinheit 3 eine Skala 4 angeordnet. Von den Betriebsstoffsymbolen 2 sind beispielhaft das rechte Symbol 6 als Zapfsäule und das linke Symbol 5 als Zusatzstofftank dargestellt. Unterhalb des linken Betriebsstoffssymbols 5 kann z. B. die Bezeichnung des gerade angezeigten Betriebsstoffs dargestellt werden. Das gegenüberliegende rechte Betriebsstoffsymbol 6 signalisiert im Fall der Abbildung 1 den Kraftstoff. Die Zuordnung des linken Betriebsstoffsymbols 5 bzw. des rechten Betriebsstoffsymbols 6 zu den Betriebsstoffen "Zusatzstoff" bzw. "Kraftstoff" ist lediglich beispielhaft gemeint. Je nach Verwendung können die beiden Betriebsstoffsymbole 5 und 6 auch andere Betriebsstoffe symbolisieren. Die Skala 4 weist vier Markierungen 7 auf, die den Füllstand des jeweiligen Vorratsbehälters darstellen. Die Markierungen 7 bezeichnen mit Bezugspunkt 8 eine maximale zur Verfügung stehende Vorratsmenge und mit Bezugspunkt 9 den Verbrauch eines Viertels des Gesamtvorrats. Bei Erreichen der Bezugspunkte 10 und 11 steht dem Kraftfahrzeuglenker jeweils noch die Hälfte bzw. ein Viertel der maximalen möglichen Füllstandsmenge zur Verfügung. Befindet sich der nicht dargestellte Zeiger zwischen den Bezugspunkten 11 und 12, so verbleibt dem Kraftfahrzeuglenker weniger als ein Viertel des maximal vorhandenen Vorrats des jeweiligen Betriebsstoffs. Bewegt sich der nicht dargestellte Zeiger in den Bereich zwischen den Bezugspunkten 11 und 12 hinein, so kann eine Wamanzeige 13 aufleuchten. An den der Zeigerhalterung 1 zugewandeten unteren Enden der Bezugspunkte 12, 10 und 8 sind die Kennzeichnung hierzu "0" bzw. "1/2" bzw. "max." angeordnet und stehen für die jeweils noch vorhandene Füllstandsmenge. Die Kennzeichnungen tragen jeweils die Bezugsziffer 14.

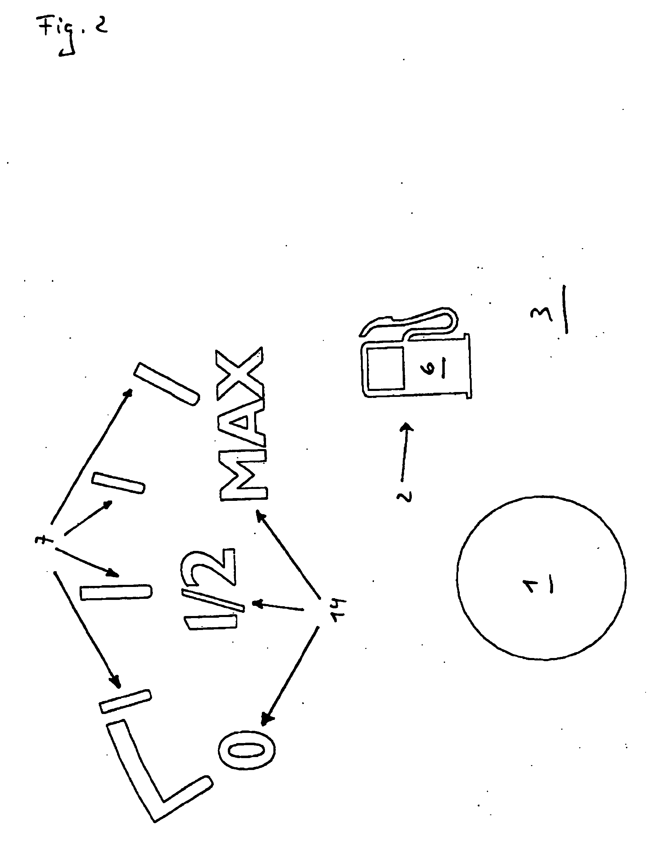

In Figur 2 ist die Anzeigeeinheit 3 des erfindungsgemäßen Anzeigegeräts dargestellt, die dem Kraftfahrzeuglenker beispielhaft bei der Anzeige des Kraftstoffs dargestellt wird. Die Darstellung in der Figur 2 unterscheidet sich von derjenigen aus Figur 1 nur dahingehend, dass das linke Betriebsstoffsymbol 5, das im Beispiel einen Zusatzstoff repräsentiert, nicht dargestellt ist.

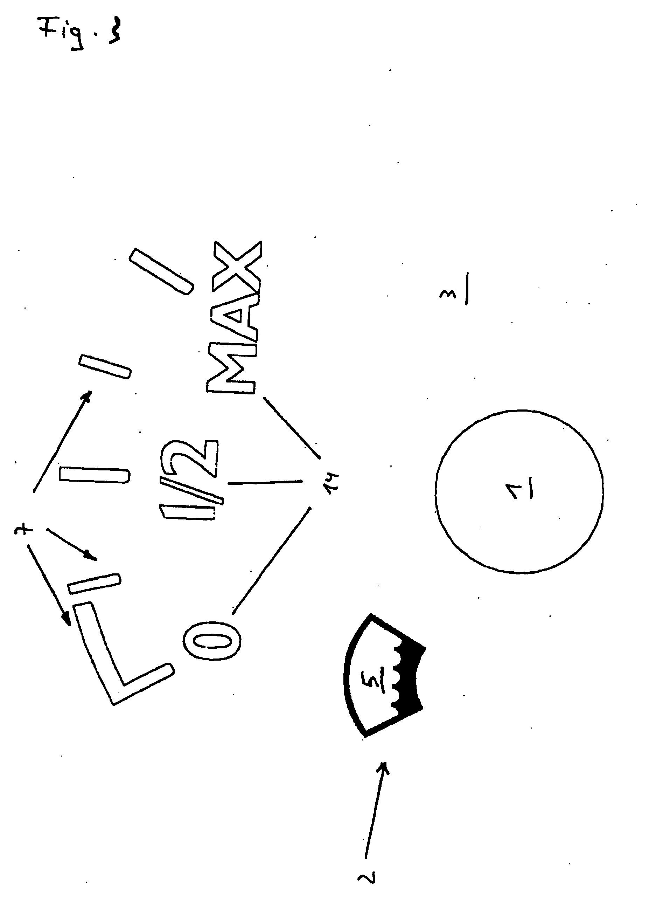

Figur 3 zeigt die Anzeigeeinheit 3 in der Darstellung, die beispielhaft nur die Füllstandsmenge 5 eines Zusatzstoffs repräsentiert.

### Bezugsziffern:

- 1: Zeigerhalterung
- 2: Betriebsstoffsymbole
- 3: Anzeigeeinheit
- 4: Skala
- 5: Linkes Betriebsstoffsymbol
- 6: Rechtes Betriebsstoffsymbol
- 7: Markierung
- 8: Bezugspunkt (maximaler Vorrat)
- 9: Bezugspunkt (Verbrauch 1/4)
- 10: Bezugspunkt (Verbrauch 1/2)
- 11: Bezugspunkt (Verbrauch 3/4)
- 12: Restvorrat "0"
- 13: Wamanzeige
- 14: Kennzeichnung

## Patentansprüche

1. Kraftfahrzeug, insbesondere Nutzfahrzeug wie LKW und Omnibus, dessen Armaturenbrett im Blickfeld des Fahrers ein Anzeigegerät zur Anzeige der Füllstande von mindestens zwei in entsprechenden Vorratsbehältern bevorrateten Betriebsstoffen aufweist, wobei das Anzeigegerät eine einzige Anzeigeeinheit (3) umfasst, mit der die Füllstände der verschiedenen Vorratsbehälter anzeigbar sind, **dadurch gekennzeichnet, dass** derjenige Füllstand als erster angezeigt wird, dessen Betriebsstoff die höchste Priorität bezüglich Sicherheit und/oder Ökologie und/oder Ökonomie und/oder Komfort aufweist.

2. Kraftfahrzeug nach Anspruch (1), **dadurch gekennzeichnet, dass** die Anzeigeeinheit (3) die Füllstande in zeitlichem Abstand nacheinander anzeigt.

3. Verfahren zum Betrieb des Anzeigegeräts in einem Kraftfahrzeug nach Anspruch (1), **dadurch gekennzeichnet, dass** die verschiedenen Füllstandsanzeigen durch von einander unabhängige manuelle Betätigungen abgerufen werden.

4. Verfahren zum Betrieb des Anzeigegeräts in einem Kraftfahrzeug nach Anspruch (1), **dadurch gekennzeichnet, dass** die verschiedenen Füllstände automatisch in Abhängigkeit eines hinterlegten Algorithmus angezeigt werden.

5. Verfahren zum Betrieb des Anzeigegeräts in einem Kraftfahrzeug nach Anspruch (1), **dadurch gekennzeichnet, dass** als erster Füllstand derjenige mit der geringsten verbleibenden Fahrdistanz angezeigt wird.

6. Verfahren zum Betrieb des Anzeigegeräts in einem Kraftfahrzeug nach Anspruch 1, **dadurch gekennzeichnet, dass** die Füllstande zeitlich unabhängig voneinander oder in zeitlichem Abstand nacheinander angezeigt werden.

7. Verfahren nach Anspruch (6), **dadurch gekennzeichnet, dass** nach Einschalten der Zündung des Motors sämtliche Füllstände in zeitlichem Abstand nacheinander angezeigt werden.

8. Verfahren nach Anspruch (6), **dadurch gekennzeichnet, dass** die verschiedenen Füllstände in einem vorbestimmten Zyklus in zeitlichem Abstand voneinander angezeigt werden.

9. Verfahren nach Anspruch (3), **dadurch gekennzeichnet, dass** die unterschiedlichen Verfahrensweisen der Füllstandsanzeigen miteinander kombinierbar sind.

10. Verfahren nach Anspruche (3), **dadurch gekennzeichnet, dass** die verschiedenen Füllstände über ein unterschiedliches Symbol (2) in der Anzeigeeinheit (3) rückgemeldet werden.

## Claims

1. Motor vehicle, in particular a commercial vehicle, such as a truck and omnibus, the dashboard of which vehicle features an indicator in the driver's field of vision to display the fill levels of at least two operating fluids stored in corresponding reservoirs, whereby the indicator comprises a single indicator unit (3), with which indicator unit the fill levels of the different reservoirs can be displayed, **characterised in that** the respective fill level is displayed first, the operating fluid of which has the highest priority in terms of safety and/or ecology and/or economy and/or comfort.

2. Motor vehicle according to claim (1), **characterised in that** the indicator unit (3) displays the fill levels at intervals one after the other.

3. Process for the operation of the indicator in a motor vehicle according to claim (1), **characterised in that** the different fill level displays are called up manually independently of each other.

4. Process for the operation of the indicator in a motor vehicle according to claim (1), **characterised in that** the different fill levels are displayed automatically as a function of a stored algorithm.

5. Process for the operation of the indicator in a motor vehicle according to claim (1), **characterised in that** the respective fill level with the lowest remaining driving distance is displayed as the first fill level.

6. Process for the operation of the indicator in a motor vehicle according to claim 1, **characterised in that** the fill levels are displayed independently of each other in terms of time or at intervals one after the other.

7. Process according to claim (6), **characterised in that** all the fill levels are displayed at intervals one after the other when the engine ignition is switched on.

8. Process according to claim (6), **characterised in that** the different fill levels are displayed in a predetermined cycle at intervals from each other.

9. Process according to claim (3), **characterised in that** the different procedures of the fill level indicators can be combined with each other.

10. Process according to claim (3), **characterised in that** the different fill levels are fed back in the indicator unit (3) via a different symbol (2).

## Revendications

1. Véhicule motorisé, en particulier véhicule industriel tel qu'un camion ou un bus, dont le tableau de bord présente dans le champ de vision du chauffeur un appareil d'affichage destiné à afficher les niveaux de remplissage d'au moins deux fluides contenus dans des réservoirs respectifs, auquel cas le dispositif d'affichage comprend une seule unité d'affichage (3) permettant d'afficher les niveaux de remplissage des différents réservoirs, **caractérisé en ce que** le niveau de remplissage du réservoir dont le fluide possède la plus grande priorité en matière de sécurité et/ou d'écologie et/ou d'économie et/ou de confort est affiché en premier.

2. Véhicule motorisé selon la revendication (1), **caractérisé en ce que** l'unité d'affichage (3) affiche les niveaux de remplissage l'un après l'autre dans un espace temporel.

3. Procédure pour le fonctionnement du dispositif d'affichage dans un véhicule motorisé selon la revendication (1), **caractérisée en ce que** les différents affichages de niveau de remplissage sont appelés par des commandes manuelles indépendantes l'une de l'autre.

4. Procédure pour le fonctionnement du dispositif d'affichage dans un véhicule motorisé selon la revendication (1), **caractérisée en ce que** les différents niveaux de remplissage sont affichés automatiquement en fonction d'un algorithme enregistré.

5. Procédure pour le fonctionnement du dispositif d'affichage dans un véhicule motorisé selon la revendication (1), **caractérisée en ce que** le niveau de remplissage affiché en premier est celui du fluide dont l'autonomie résiduelle est la plus faible.

6. Procédure pour le fonctionnement du dispositif d'affichage dans un véhicule motorisé selon la revendication (1), **caractérisée en ce que** les niveaux de remplissage sont affichés indépendamment dans le temps l'un de l'autre ou l'un après l'autre dans un espace temporel.

7. Procédure selon la revendication (6), **caractérisée en ce que** tous les niveaux de remplissage sont affichés l'un après l'autre dans un espace temporel une fois le contact du moteur mis.

8. Procédure selon la revendication (6), **caractérisée en ce que** les différents niveaux de remplissage sont affichés l'un par rapport à l'autre dans un espace temporel selon un cycle prédéterminé.

9. Procédure selon la revendication (3), **caractérisée en ce que** les différentes procédures d'affichage des niveaux de remplissage peuvent être combinées entre elles.

10. Procédure selon la revendication (3), **caractérisée en ce que** les différents niveaux de remplissage sont confirmés dans l'unité d'affichage (3) au moyen d'un symbole différent (2).
